Europäisches Patentamt

European Patent Office

Office européen des brevets

(11) Veröffentlichungsnummer: **0 380 988 B1**

# (12) EUROPÄISCHE PATENTSCHRIFT

(45) Veröffentlichungstag der Patentschrift: **16.03.94**

(51) Int. Cl.⁵: **C01B 3/36, C10J 3/48**

(21) Anmeldenummer: **90101153.6**

(22) Anmeldetag: **20.01.90**

(54) Verfahren zur Herstellung von Synthesegas durch partielle Oxidation.

(30) Priorität: **31.01.89 DE 3902773**

(43) Veröffentlichungstag der Anmeldung:
**08.08.90 Patentblatt 90/32**

(45) Bekanntmachung des Hinweises auf die
Patenterteilung:
**16.03.94 Patentblatt 94/11**

(84) Benannte Vertragsstaaten:
**AT BE DE ES FR GB IT NL SE**

(56) Entgegenhaltungen:
**EP-A- 0 095 103
EP-A- 0 108 503
EP-A- 0 184 164
US-A- 3 945 942
US-A- 4 443 230**

(73) Patentinhaber: **BASF Aktiengesellschaft
Carl-Bosch-Strasse 38
D-67063 Ludwigshafen(DE)**

(72) Erfinder: **Lueth, Gero, Dr.
Paul-Martin-Ufer 11
D-6800 Mannheim 1(DE)**
Erfinder: **Becker, Rolf, Dr.
Im Kreuzgewann 24
D-6940 Weinheim(DE)**
Erfinder: **Horn, Robert K., Dr.
Edenkobener Strasse 1
D-6700 Ludwigshafen(DE)**
Erfinder: **Kempe, Uwe, Dr.
Danziger Strasse 9
D-6701 Dannstadt-Schauernheim(DE)**
Erfinder: **Vodrazka, Wolfgang, Dr.
Am Rosenbuehl 21
D-6713 Freinsheim(DE)**

**Beschreibung**

Es ist bekannt, Synthesegase, die CO, $H_2$, $H_2O$, $CH_4$ und ggf. $N_2$ enthalten, durch partielle Oxidation von flüssigen Kohlenwasserstoffen, feinstgemahlenen festen Brennstoffen oder Mischungen aus beiden in Gegenwart von Sauerstoff oder sauerstoffhaltigen Gasen, wie Luft oder sauerstoffangereicherter Luft herzustellen.

In der US-A-4 443 230 ist dazu ein Brenner beschrieben, bei die Entspannung mit Unterschallgeschwindigkeit bis zur Schallgeschwindigkeit durchgeführt wird.

Gelegentlich wird auch neben der CO- und $H_2$-Erzeugung die Bildung von Methan angestrebt (US-A 3,951,617), um Gase mit höherem Heizwert zu erhalten. Bei so gelenkten Prozessen fällt wegen der erforderlichen niedrigen Temperaturen besonders viel Ruß an.

Die bekannten Verfahren arbeiten in der Regel unter einem Druck von 1 bis 100 bar, vorzugsweise 30 bis 80 bar, wobei der Brennstoff mit Sauerstoff oder einem sauerstoffhaltigen Gas - in einem leeren, ausgemauerten Reaktor ohne Einbauten zu einem Gasgemisch bestehend aus mehreren Komponenten umgesetzt wird. Im allgemeinen enthält das Gemisch $CO_2$, CO, $CH_4$, COS, $H_2O$, $H_2S$, $H_2$ und $N_2$. Daneben entsteht abhängig von der C-Zahl der eingesetzten Brennstoffe zunehmend Ruß oder Koks, der durch aufwendige Verfahren aus dem Spaltgas abgetrennt (z.B. US-A 3 980 590-592) gegebenenfalls wieder dem Prozess zugeführt werden muß. Wenn es sich um aschereiche Brennstoffe handelt, muß stets ein Teil des entstandenen Rußes oder Kokses ausgeschleust werden. Eine Rückführung zum Einsatzbrennstoff kann zu einer unerwünschten Anreicherung von Schlacken im Recktionsraum führen.

Den Verfahren, bei denen der flüssige Brennstoff über eine Einstoffdüse unter hohem Druck in den Sauerstoff-Dampfstrom verdüst wird, haftet der Nachteil an, daß Düsengröße, Düsendruck, Ölviskosität (Öltemperatur) jeweils aufeinander abgestimmt werden müssen, um eine optimale Verteilung des Brennstoffes in dem Sauerstoff-Dampfstrom zu gewährleisten. Laständerungen bei gleicher Düse sind nur in geringem Umfang möglich. In der Regel muß bei Teillast ein Düsenwechsel, verbunden mit einer Abstellung, vorgenommen werden. Auch sind die feinen Düsenkanäle sehr empfindlich gegen gröbere Feststoffanteile im Öl. Verstopfungen führen zu ungleichem Brand, was gelegentlich zu Reaktorwanddurchbrüchen und Gasausbrüchen führen kann.

Die bekannten technischen Verfahren unterscheiden sich meist in der Methodik der Rußentfernung und Aufarbeitung und/oder in der Zuführung der Reaktionsprodukte zum Reaktor.

Es wurde nun gefunden, daß man die Nachteile der bekannten Verfahren bei der Verwendung von aschereichen Brennstoffen vermeidet, wenn man bei der Herstellung von Synthesegasen durch partielle autotherme Oxidation von flüssigen Brennstoffen und/oder festen Brennstoffen in Gegenwart von Sauerstoff oder sauerstoffhaltigen Gasen unter Zusatz eines Temperaturmoderators wie Wasserdampf und/oder $CO_2$ in einem Reaktorraum ohne Einbauten bei Temperaturen von 1.000 bis 1.500 °C bei einem Druck von 1 bis 100 bar, wobei die Reaktionspartner Brennstoff und sauerstoffhaltiges Gas getrennt dem Reaktor zugeführt werden, parallel zur Zuführung des Brennstoffes die Zuführung des Wasserdampfs bzw. $CO_2$ vornimmt und unmittelbar vor der Mündungsöffnung für den Brennstoff den Wasserdampf durch eine oder mehrere Düsen in den Brennstoffstrom entspannt, wobei die Entspannung mit über 100 bis 250 %, vorzugsweise bis 140 %, des kritischen Druckverhältnisses vorgenommen wird.

Vorzugsweise wird die Entspannung mit bis 140 % des kritischen Durckverhältnisses vorgenommen. Das kritische Druckverhältnis liegt dann vor, wenn der Druck der Düse gleich

$$\left(\frac{2}{x+1}\right) \cdot \text{Exp} - \left(\frac{x}{x-1}\right)$$

mal dem Reaktordruck ist; mit X dem adiabaten Exponenten.

Z.B. mit X = 1,3 ist der Düsenvordruck das 1,83fache des Reaktordruckes.

Ein weiterer Gegenstand der Erfindung ist eine Vorrichtung zur Durchführung des Verfahrens bestehend aus einem leeren, von Einbauten freien Reaktor mit einem Dreistrombrenner mit jeweils einer oder mehreren getrennten Zuführungen für Brennstoff (2) und Sauerstoff (3) zum wassergekühlten Brennermund (5) und paralleler Zuführung von Wasserdampf und/oder Kohlendioxid, wobei man das Rohr für den Dampf (1) konzentrisch innerhalb des Rohres für den Brennstoff verlegt und die Entspannung des Dampfes in das Öl durch eine zentrale Düse vornimmt, die bündig mit oder bis zum 5fachen Durchmesser des Brennstoffrohres in Strömungsrichtung vor der Mündungsöffnung des Brennstoffrohres endet, sowie eine Kühlwasserzuführung (4).

Erfindungsgemäß wird bei Verwendung von hochprozentigem Sauerstoff und flüssigen Kohlenwasserstoffen ein Temperaturmoderator in einer Menge zugegeben, welche die Temperatur auf ca. 1.300 bis 1.500°C begrenzt, d.h. den Temperaturbereich, in dem die höchsten Umsatzgeschwindigkeiten erreicht werden. Wenn die Methanbildung gefördert werden soll, müssen die Temperaturen auf ca. 1.000 bis 1.200°C gesenkt werden. Als Moderator wird im allgemeinen Wasserdampf in einer Menge von 0,05- bis 0,8fachen der Brennstoffmenge, vorzugsweise das 0,2- bis 0,4fache (W/W) verwendet. Es kann aber auch $CO_2$ verwendet werden, wenn man ein CO-reiches Gas wünscht, hierbei werden die Mengen auch gelegentlich höher angesetzt und das $CO_2$ nach der Spaltgaswäsche wieder im Kreis zurückgeführt.

Erfindungsgemäß wird überwiegend Wasserdampf als Moderator eingesetzt. Das erfindungsgemäße Verfahren stellt eine neue Methode dar, um flüssige Brennstoffe und Suspensionen von festen Brennstoffen in flüssigen Brennstoffen oder in Wasser in den Reaktionsraum einzubringen und die Reaktion in optimaler Weise zu lenken.

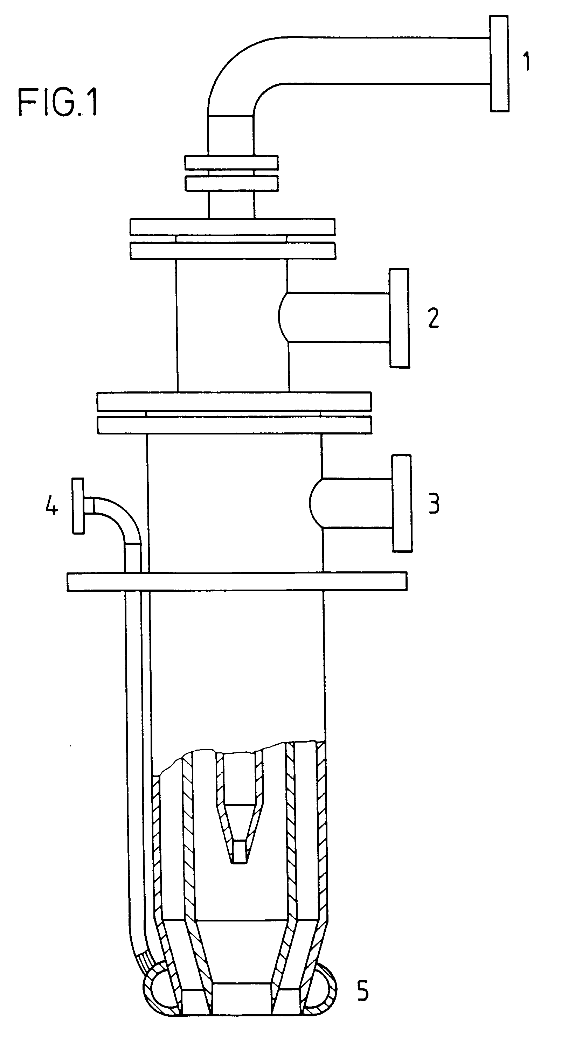

Bei dem erfindungsgemäßen Verfahren, bei dem Brennstoff und Sauerstoff und Wasserdampf bzw. $CO_2$ durch einen Dreistrombrenner, (Figur 1), dem Reaktionsraum zugeführt werden, treten die genannten Nachteile nicht auf, da die Belastung, ausgehend von der Maximallast in weiten Grenzen variierbar ist. Die Dispergierung des flussigen Brennstoffes mit dem Moderationsdampf kann auch bei der Verwendung von Zweistrombrennern außerhalb des Reaktors vor dem Brenner in einem Mischer erfolgen. Nach dem Mischer kann das Öl-Dampf-Gemisch durch die Rohrleitung zum Brenner geführt werden, tritt durch den Ringspalt aus und mischt sich im Reaktor unter weiterer Öldispersion mit dem Saurestoff. Die Last kann auf ca. 60 % heruntergefahren werden. Trotz dieses bereiten Belastungsbereiches des Brenners hängt aber die "Vergasgungsgüte" auch bei diesem Verfahren von der Belastung ab wie in den Biespielen 2 und 3 gezeigt wird.

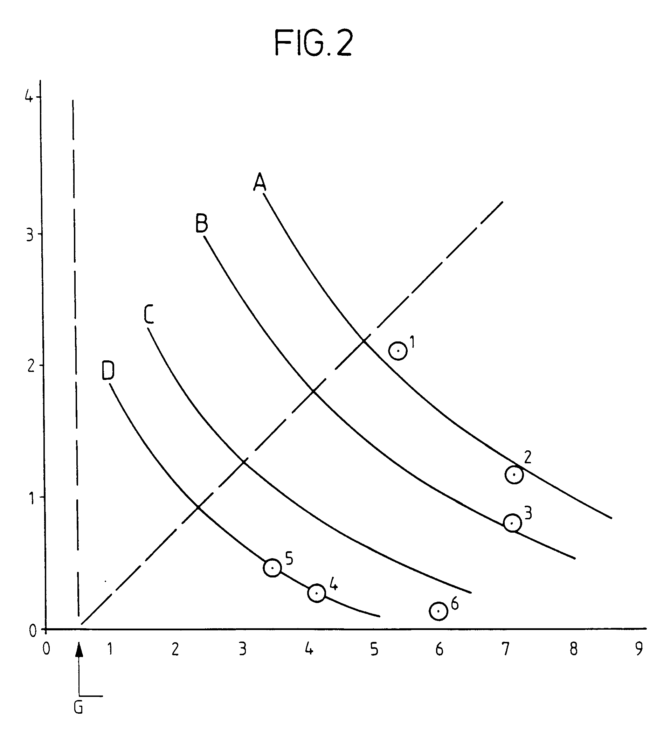

Die Gleichgewichtskonzentration (G in Figur 2) von $CO_2$ in Gegenwart von Kohlenstoff liegt bei 1.350°C und 40 bar Gesamtdruck von 45 % CO bei etwa 0,5 % $CO_2$ im Spaltgas. Der effektive $CO_2$-Gehalt im Spaltgas bei bestimmter Rußkonzentration im Spaltgas, ausgedrückt in kg Ruß pro 100 kg Brennstoff ist ein Maß für die Annäherung an das Gleichgewicht und damit für den Umsatz bei der Vergasungsreaktion.

Andererseits bedeutet wenig Ruß bei gegebenem $CO_2$-Gehalt im Spaltgas, daß günstige Vergasungsbedingungen vorliegen.

In dem Diagramm (Figur 2) in dem der Rußanfall in kg Ruß/100 kg Öl auf der Ordinate und der $CO_2$-Gehalt auf der Abzisse aufgetragen sind, ist die "Vergasungsgüte" übersichtlich dargestellt. Werte gleicher "Vergasungsgüte" liegen auf einer Hyperbel, deren "senkrechter" Ast sich dem $CO_2$-Gleichgewichtsanteil im Spaltgas nähert während sich der "waagrechte" Ast der Abzissenachse nähert. Wenn kein Kohlenstoff mehr vorhanden ist, kann kein $CO_2$ mehr zu CO umgesetzt werden. Je näher der Scheitelpunkt der Hyperbel sich dem Schnittpunkt von $CO_2$-Gleichgewichtskonzentration und Abzissenachse nähert, desto besser ist die "Vergasungsgüte" und desto kleiner sind die Vergasungsverluste an Ruß und $CO_2$. Höhere $CO_2$-Werte im Spaltgas lassen sich durch mehr Moderationsdampf gekoppelt mit höherem spezifischen Sauerstoff einstellen. Die geringsten $CO_2$-Gehalte erreicht man mit sehr wenig Moderationsdampf z.B. $\leq$ 0,2 t Dampf/t Brennstoff. Dabei steigt bei vorgegebener "Vergasungsgüte" der Rußanfall an.

Die Hyperbelabschnitte A bis D in Figur 2 entsprechen zunenmender "Vergasungsgüte".

Die Punkte sind die Meßpunkte der Beispiele 1 bis 6:

```
(1) 10    t/h 01 )
(2) 10    t/h 01 )
(3) 12,5 t/h 01 )   → Zweistrombrenner


(4) 10    t/h 01 )
(5) 10,5 t/h 01 )   → Dreistrombrenner gemäß dem erfindungsgemäßen
(6)  7   t/h 01 )      Verfahren
```

Es hat sich gezeigt, daß mit herkömmlichen Zweistrombrennern sowohl bei Minderlast als auch bei Normallast mit Einsatz höher viskoser Öle als auch besonders beim Einsatz von Rückstandsölen mit sehr geringen Anteilen an leichtflüchtigen Komponenten, die oben definierte "Vergasungsgüte" merklich schlechter wird. Nur bei verhältnismäßig hohem Sauerstoff- und Wasserdampfeinsatz gelingt es, den Rußanfall in erträglichen Grenzen zu halten. Dies ist besonders dann von Bedeutung, wenn man die aufwendige Rußrückführung zum Einsatzbrennstoff vermeiden und das Rußwaschwasser einer anderen Behandlung zuführen will.

Die erfindungsgemäße Verlegung der Dampfzugabe zum flüssigen Brennstoff in die Nähe der Austrittsöffnung und die Zumischung des Dampfes zum Öl über eine Düse mit einem kritischen Druckabfall von über 100 bis 250 %, vorzugsweise bis 140 % führt zu einer überraschenden Verbesserung der Vergasungsgüte. Man erhält mit sehr wenig Wasserdampf und sehr wenig Sauerstoffüberschuß ein Synthesegas mit sehr geringem $CO_2$-Gehalt und wenig Ruß als Nebenprodukt, d.h. die Vergasungsgüte nimmt kräftig zu.

Weiter wurde gefunden, daß man auch nur einen Teil des notwenigen Moderationsdampfes in den Ölstrom entspannen kann und den übrigen Teil des Moderationsdampfes dann dem Sauerstoff oder auch dem Brennstoff zugeben kann. Es ist auf diese Weise möglich, die Dampfmenge, die man in das Öl über die Düsen entspannt, so klein zu wählen, daß sie bei Teillast ausreicht. Bei Normallast gibt man den notwendigen zusätzlichen Moderationsdampf über den Sauerstoff zu.

Das erfindungsgemäße Verfahren verbindet also die Vorteile der günstigen Verdüsungsbedingungen mit dem Vorteil einer großen Flexibilität in der Reaktorbelastung. Aber auch bei der Vergasung von höher viskosen Rückstandsölen, die arm an flüchtigen Bestandteilen sind, werden höhere Ausbeuten erreicht.

Ein positiver Nebeneffekt des erfindungsgemäßen Verfahrens liegt darin, daß die bei dem partiellen Oxidationsverfahren stets anfallenden Feststoffpartikel deutlich kleiner sind. Es ist deshalb ein geringerer Verschleiß im nachgeschalteten Abhitzesystem zu erwarten.

Beispiel 1

In einem bei 40 bar betriebenen Synthesegasgenerator wird über einen Zweistrombrenner 10 t/h eines hochsiedenen Vakuumrückstandes eingebracht, das Öl wird mit 2,8 t Dampf, 70 bar (= 0,28 t Dampf/t Öl) in einem statistischen Mischer vordispergiert und dann mit 8.050 $Nm^3$/h Sauerstoff, dem 0,5 t/h Wasserdampf zugemischt werden (0,05 t Dampf/t Öl) verdüst und bei 1.400 °C zur Reaktion gebracht. Nach Abkühlung weist das Spaltgas einen $CO_2$-Gehalt von 5,4 % und einen Rußgehalt von 1,9 kg Kohlenstoff pro 100 kg Ausgangsöl auf. (Punkt 1 in Figur 2).

Beispiel 2

In einem unter gleichen Bedingungen wie Beispiel 1 betriebenen Synthesegasgenerator werden 10 t/h Vakuumrückstand eingebracht, das Öl wird aber mit einer erhöhten Wasserdampfmenge von 3,91 t Dampf von 70 bar, d.h. 0,39 t Dampf/t Öl, vordispergiert und mit einer entsprechend erhöhten Sauerstoffmenge, der ebenfalls 0,5 t/h Wasserdampf zugemischt werden, zur Reaktion gebracht. Das gekühlte Spaltgas enthält 7,1 % $CO_2$ und 1,17 kg Kohlenstoff pro 100 kg Ausgangsöl (Punkt 2 in Figur 2). Man sieht, daß durch höhere $CO_2$-Werte, verursacht durch mehr Wasserdampf und mehr Sauerstoff, niedrigere Rußwerte bei gleicher Belastung erzielt werden.

Beispiel 3

Unter gleichen Bedingungen wie Beispiel 1 und 2 werden 12,5 t/h Vakuumrückstand, d.h. bei einer um 25 % höheren Belastung mit der gleichen Düsenanordnung vergast. Dabei wird das Öl mit 4,8 t/h Wasserdampf, 70 bar, d.h. 0,39 t + Dampf/t Öl, wie in Beispiel 2 vordispergiert und dann mit 10.000 $Nm^3$/h Sauerstoff, dem 0,4 t Dampf/h zugemischt sind, vergast. Das gekühlte Spaltgas enthält 7,1 % $CO_2$ und 0,8 kg Kohlenstoff pro 100 kg Öleinsatz (Punkt 3, Figur 1). Man sieht, daß durch die höhere Belastung die Vergasungsgüte bei sonst gleichen Verfahrensparametern steigt.

Beispiel 4

Im gleichen Synthesegasgenerator, der in Beispiel 1 verwendet wurde, wird eine Düse gemäß Abbildung 1 eingebaut. Der Düsenmund der Dampfdüse endet in Strömungsrichtung 2 mm vor der Mündung des Ölrohres. Der Dampfdruck vor der Düse beträgt 100 bar, d.h. das 2,5fache des Reaktordruk-kes, was etwa 135 % des kritischen Drucksprunges entspricht. Vergast werden 10 t/h Vakuumrückstand mit 2,66 t/h Wasserdampf über die Düse (0,27 t Dampf/t Öl) unter Zugabe von 7.900 $m^3$/h Sauerstoff, dem weitere 1,1 t Wasserdampf (0,11 t Dampf/t Öl) zugesetzt werden.

Das gekühlte Spaltgas enthält 4,2 % $CO_2$ und 0,25 kg Kohlenstoff im Ruß pro 100 kg Einsatzöl (Punkt 4 in Figur 2). Man sieht, daß bei erheblich geringeren $CO_2$-Werten, ein erheblich geringerer Rußanfall entsteht. In diesem Fall enthält der Ruß 21 % Schlacke, d.h. auf 1 kg Schlacke nur noch 3,8 kg Kohlenstoff, während bei den Beispielen 1 bis 3 etwa 15 bis 25 kg Kohlenstoff pro kg Schlacke anfielen. Eine Rußrückführung kann entfallen.

Beispiel 5

Unter gleichen Bedingungen wie in Beispiel 4 werden 10,5 t Vakuumrückstand bei gleicher Dampfbelastung der Düse, d.h. 2,64 t Dampf bei 100 bar pro Stunde vergast. Die Dampfmenge wird, bezogen auf den Sauerstoff auf 1,0 t/h, das sind 0,09 t Dampf/t Öl, leicht reduziert.

Nach dem Abkühlen enthält das Spaltgas 3,5 % $CO_2$ und 0,42 kg Ruß pro 100 kg Öl. Punkt 5 in Figur 2 zeigt, daß der Mindereinsatz von Dampf und Sauerstoff - zu niedrigerem $CO_2$ - und höheren Rußmengen führt.

Beispiel 6

Unter sonst gleichen Bedingungen wie in Beispiel 4 und 5 werden 7 t Vakuumrückstand/h (minus 30 %) mit entsprechend niedrigerer Sauerstoffmenge vergast, dem nur eine Menge von 0,08 t Dampf (= 0,01 t Dampf/t Öl) zugesetzt wird. D.h. der ganze Moderationsdampf von 2,64 t/h, d.h. 0,38 t Dampf/t Öl (wie in Beispiel 2 und 3) wird über die Düse entspannt. Diese Vergasungsbedingungen sind so günstig, daß man mit spezifisch kleinerer Sauerstoffmenge auskommt als bei den Beispielen 2 und 3. Das gekühlte Spaltgas enthält 6 % $CO_2$ und 0,25 % Kohlenstoff im Ruß pro 100 kg Einsatzöl (Punkt 6 in Figur 2). Man sieht, daß durch die größere spezifische Dampfmenge pro t Öl, welche sich durch die bei festem Düsenquerschnitt konstante Dampfmenge bei Teillast des Öls (-30 %) ergibt, mehr $CO_2$ entsteht, daß aber durch die wesentlich bessere Vergasungsgüte bei Anwendung des erfindungsgemäßen Verfahrens außerordentlich wenig Kohlenstoff im Gas anfällt.

**Patentansprüche**

1.  Verfahren zur Herstellung von Synthesegasen durch partielle autotherme Oxidation von flüssigen Brennstoffen und/oder festen Brennstoffen in Gegenwart von Sauerstoff oder sauerstoffhaltigen Gasen unter Zusatz eines Temperaturmoderators wie Wasserdampf und/oder $CO_2$ in einem leeren Reaktorraum ohne Einbauten bei Temperaturen von 1.000 bis 1.500 °C bei einem Druck von 1 bis 100 bar, wobei die Reaktionspartner Brennstoff und sauerstoffhaltiges Gas getrennt dem Reaktor zugeführt werden, dadurch gekennzeichnet, daß man parallel zur Zuführung des Brennstoffes die Zuführung des Wasserdampfs bzw. $CO_2$ vornimmt und unmittelbar vor der Mündungsöffnung für den Brennstoff den Wasserdampf durch eine oder mehrere Düsen in den Brennstoffstrom entspannt, wobei die Entspannung mit über 100 bis 250 %, vorzugsweise bis 140 %, des kritischen Druckverhältnisses vorgenommen wird.

2.  Verfahren nach Anspruch 1, dadurch gekennzeichnet, daß man für den Voll- und Teillastfall stets die gleiche Dampfmenge ausströmen läßt, d.h. keine Mengenregelung durch vorgeschaltete Regelorgane vornimmt, die Düsenöffnung(en) so bemißt, daß im Teillastfall die gesamte für die Prozeßführung nötige Dampfmenge durch die Düse austritt, im Vollastfall die zusätzlich benötigte Menge an Dampf dem Sauerstoff oder dem Brennstoff zugegeben wird.

**Claims**

1.  A process for the preparation of a synthesis gas by partial autothermal oxidation of liquid fuels and/or solid fuels in the presence of oxygen or oxygen-containing gases with the addition of a temperature moderator, such as steam and/or $CO_2$, in an empty reactor space without baffles, at from 1000 to 1500 °C under from 1 to 100 bar, the reactants fuel and oxygen-containing gas being fed separately to the reactor, wherein the steam or $CO_2$ is fed in simultaneously with the feed of the fuel and the steam is let down through one or more nozzles into the fuel stream directly before the orifice for the fuel, letdown being effected at above 100 up to 250%, preferably up to 140%, of the critical pressure ratio.

2.  A process as claimed in claim 1, wherein, for full or part load, the same amount of steam is always allowed to flow out, ie. the amount is not regulated by upstream control elements, and the nozzle orifice or orifices is or are dimensioned such that, in the case of part load, a total amount of steam required for carrying out the process flows through the nozzle and, in the case of full load, the additional amount of steam required is added to the oxygen or to the fuel.

**Revendications**

1.  Procédé de préparation de gaz de synthèse par oxydation partielle autotherme de combustibles liquides et/ou de combustibles solides en présence d'oxygéne ou de gaz contenant de l'oxygéne, avec addition d'un modérateur de température tel que la vapeur d'eau et/ou $CO_2$, dans un volume de réacteur vide dépourvu d'inclusions, à des températures de 1000 à 1500°C et sous une pression de 1 à 100 bar, les partenaires réactionnels, combustible et gaz contenant de l'oxygéne, étant introduits séparément dans le réacteur, caractérisé en ce qu'on procède à l'introduction de la vapeur d'eau ou du $CO_2$ parallèlement à l'introduction du combustible et on détend la vapeur d'eau dans le courant de combustible à travers un ou plusieurs ajutages immédiatement en amont de l'orifice d'entrée du combustible, la détente étant effectuée à raison de plus de 100% jusqu'à 250%, de préférence jusqu'à 140% du rapport de pression critique.

2.  Procédé selon la revendication 1, caractérisé en ce qu'en cas de pleine charge et en cas de charge partielle, on laisse constamment s'écouler la même quantité de vapeur, c'est-à-dire qu'on ne procède pas à un réglage du débit par des organes de réglage disposés en amont, l'orifice ou les orifices des ajutages étant dimensionnés de telle sorte qu'en cas de charge partielle, la quantité totale de vapeur nécessaire pour le développement du processus sorte par l'ajutage ou les ajutages et qu'en cas de pleine charge, la quantité de vapeur nécessaire en plus soit ajoutée à l'oxygène ou au combustible.

FIG.1

# FIG.2